Europäisches Patentamt

European Patent Office

Office européen des brevets

(11) Veröffentlichungsnummer: **0 445 320 A1**

## (12) EUROPÄISCHE PATENTANMELDUNG

(21) Anmeldenummer: 90104228.3

(51) Int. Cl.5: **A01G 31/02**

(22) Anmeldetag: **05.03.90**

(43) Veröffentlichungstag der Anmeldung:
**11.09.91 Patentblatt 91/37**

(84) Benannte Vertragsstaaten:
**AT BE CH DE DK ES FR GB GR IT LI LU NL SE**

(71) Anmelder: **Jagodzinsky, Paul**
**Wilhelmstrasse 35**
**W-5720 Beckum(DE)**

(72) Erfinder: **Jagodzinsky, Paul**
**Wilhelmstrasse 35**
**W-5720 Beckum(DE)**

(74) Vertreter: **Müller, Gerd et al**
**Patentanwälte**
**HEMMERICH-MÜLLER-GROSSE-POLLMEIER--**
**MEY-VALENTIN Hammerstrasse 2**
**W-5900 Siegen 1(DE)**

(54) **Kastenförmiger Behälter für Hydrokulturen.**

(57) Kastenförmige Behälter (1) für Hydrokulturen mit Ständerbeinen (3) sind übereinanderstapelbar. Um die Behälter (1) eines Stapels laufend mit Nährflüssigkeit zu versorgen, ist jeder Behälter (1) mit einem Flüssigkeits-Überlaufsystem (9) ausgerüstet, dessen Einlauf (10) oberhalb und dessen Auslauf (11) unterhalb des Kastenbodens (4) liegt. Ist der oberste Behälter (1) eines Stapels bis zum Einlauf (10) mit Nährflüssigkeit gefüllt, fließt bei weiterer Zufuhr von Flüssigkeit diese über das Überlaufsystem (9) in den nächst tieferen Behälter (1). Die Näherflüssigkeit gelangt so kaskadenartig bis zum Auslauf (11) des untersten Behälters (1) des Stapels.

Fig. 1

Die Erfindung betrifft einen kastenförmigen Behälter für Hydrokulturen, der an den Kastenecken jeweils ein Ständerbein oder eine Ständersäule aufweist, wobei diese Ständerbeine bzw. Ständersäulen zumindest nach unten über den Kastenboden vorstehen, und wobei mehrere Behälter mittels ihrer Ständerbeine bzw. Ständersäulen zur Stapelbildung übereinandersetzbar sind.

Kastenförmige Behälter dieser Art für Hydrolkulturen sind bereits bekannt und in Gebrauch. Sie werden, insbesondere in den Niederlanden, in großem Umfang zur Erzeugung von Gemüsen und Salaten eingesetzt, wobei die betreffenden Gemüse- bzw. Salatpflanzen in den die Nährflüssigkeit enthaltenden Behältern aufgenommen bzw. untergebracht sind.

Die bekannten, kastenförmigen Behälter sind üblicherweise aus Holz hergestellt und haben eine solche Ausbildung, daß bei der Stapelbildung durch die Ständerbeine oder Ständersäulen zwischen den übereinanderliegenden, kastenförmigen Behältern genügend Freiraum für das Wachstum der jeweiligen Gemüse- bzw. Salatpflanzen zur Verfügung steht.

In baulicher Hinsicht hat jeder kastenförmige Behälter bspw. eine Länge von 1200 mm, eine Breite von 900 mm und eine Gesamthöhe von 500 mm, wobei die Höhe des eigentlichen Kastenkörpers bei etwa 125 mm liegt. Als Freiraum zwischen den Kastenkörpern zweier übereinanderstehender kastenförmiger Behälter stehen daher etwa 375 mm zur Verfügung.

Als wesentlicher Nachteil der kastenförmigen Behälter bekannter Bauart hat sich herausgestellt, daß das Einbringen und Nachfüllen von Nährflüssigkeit in die Kastenkörper Schwierigkeiten bereitet. Jeder einzelne Kastenkörper muß nämlich daraufhin überwacht werden, daß er ständig eine ausreichende Menge von Nährflüssigkeit enthält. Bei fehlender Nährflüssigkeit muß diese dann dem betreffenden Kastenkörper in geeigneter Weise zugeführt werden.

Der Erfindung liegt die Aufgabe zugrunde, kastenförmige Behälter für Hydrokulturen der gattungsgemäßen Art so auszustatten, daß in allen zu einem Behälterstapel gehörenden Kastenkörpern derselben eine ständig gleichmäßige Füllhöhe für die Nährflüssigkeit problemlos aufrechterhalten werden kann, ohne daß eine dauernde Überwachung der Füllhöhe in den einzelnen Kastenkörpern erforderlich ist.

Gelöst wird diese Aufgabe nach der Erfindung grundsätzlich dadurch, daß jeder Behälter mindestens ein Flüssigkeits-Überlaufsystem enthält, dessen Einlauf mit Abstand oberhalb des Kastenbodens liegt, während sein Auslauf unter dem Niveau des Kastenbodens, aber oberhalb der unteren Enden der Ständerbeine bzw. Ständersäulen mündet.

Solange sichergestellt ist, daß ein geschlossener Flüssigkeitskreislauf zwischen dem unteren kastenförmigen Behälter und dem oberen kastenförmigen Behälter eines jeden Stapels aufrechterhalten wird, ist mit der neuerungsgemäßen Kasten-Auslegung auch gewährleistet, daß jeder einzelne Kastenkörper ständig die notwendige Füllhöhe der Nährflüssigkeit enthält.

Nach der Erfindung kann es sich als vorteilhaft erweisen, wenn die Höhenlage des Einlaufs zum Flüssigkeits-Überlaufsystem jedes kastenförmigen Behälters relativ zum Kastenboden variierbar ist, weil sich dann eine Einregulierung des Nährflüssigkeits-Spiegels auf die im jeweiligen Kastenkörper enthaltenen Pflanzen individuell vornehmen läßt.

Nach der Erfindung kann jedes Flüssigkeits-Überlaufsystem im einfachsten Falle aus einem doppelten Rohrknie bestehen, das den Kastenboden durchdringt. Dabei kann es sich als wichtig erweisen, daß Einlauf uns Auflauf des doppelten Rohrknies in weiterer Ausgestaltung der Neuerung eine Versetztlage zueinander haben, die größer bemessen ist, als ihr jeweiliger Querschnitt. Auf diese Art und Weise läßt sich sicherstellen, daß ein unmittelbarer Übertritt von Nährflüssigkeit aus dem Auslauf eines Flüssigkeits-Überlaufsystems in den Einlauf des nächst unteren Flüssigkeits-Überlaufsystems verhindert wird.

Es kann sich jedoch nach der Erfindung in manchen Fällen als zweckdienlich erweisen, wenn Einlauf und Auslauf des doppelten Rohrknies eine Versetztlage zueinander haben, die kleiner bemessen ist, als ihr jeweiliger Querschnitt. Der Auslauf des Flüssigkeits-Überlaufsystems eines kastenförmigen Behälters gelangt auf diese Art und Weise in teilweise Überdeckung mit dem Einlauf am Flüssigkeits-Überlaufsystem des nächst unteren, kastenförmigen Behälters. Die Folge hiervon ist, daß ein gewisser Anteil von Nährflüssigkeit, der aus dem Auslauf des höher gelegenen Flüssigkeits-Überlaufsystems austritt, direkt in den Einlauf des tiefer gelegenen Flüssigkeits-Überlaufsystems gelangt, ohne zuvor in den Kastenkörper zu gelangen der mit dem betreffenden Flüssigkeits-Überlaufsystem ausgestattet ist.

Eine andere erfindungsgemäße Ausbildungsmöglichkeit für die kastenförmigen Behälter besteht darin, daß sich ein Flüssigkeits-Überlaufsystem in mindestens einem Ständerbein bzw. einer Ständersäule befindet.

In diesem Falle kann jedes Ständerbein bzw. jede Ständersäule einen wenigstens an seinem unteren Ende abgeschlossenen, z.B. einen Boden aufweisenden, Hohlkörper bilden, an den sich ein einwärts gerichteter Auslauf, bspw. mit rohrartiger Verlängerung anschließt.

Als vorteilhaft hat sich auch herausgestellt, wenn der Einlauf des Flüssigkeits-Überlaufsystems sich am Ende eines Schwenkrohres befindet, das um eine zum Kastenboden parallele Achse beweglich gelagert ist. Je nach Schwenklage des Schwenkrohres kann dadurch der Spiegel für die Nährflüssigkeit in jedem einzelnen Kastenkörper problemlos variiert werden.

Nach der Erfindung ist es aber auch möglich, mehrere Einläufe in verschiedener Höhenlage des Flüssigkeits-Überlaufsystems anzuordnen und unabhängig voneinander durch je einen Stopfen, Dekkel oder dergleichen wahlweise zu verschließen oder freizugeben. In diesem Falle ist eine stufenweise Regulierung des Flüssigkeitsspiegels in jedem einzelnen Kastenkörper erreichbar.

Es kann aber nach der Erfindung auch jedes Flüssigkeits-Überlaufsystem ein Ventil aufweisen, das, vorzugsweise selbsttätig, öffen- und schließbar ist. Die Ausbildung dieses Ventils sollte dabei zweckmäßigerweise von solcher Art sein, daß ein selbsttätiges Öffnen eintritt, sobald mehrere kastenförmige Behälter zur Stapelbildung übereinandergesetzt werden. Hingegen sollte das betreffende Ventil bei nicht übereinandergestapelten, kastenförmigen Behältern selbsttätig in seine Geschlossenstellung gelangen.

Ein besonderes Wesensmerkmal wird nach der Erfindung schließlich noch darin gesehen, daß am kastenförmigen Behälter nicht nur der Kastenkörper, sondern auch die Ständerbeine bzw. Ständersäulen und das Flüssigkeits-Überlaufsystem aus Kunststoff gefertigt sind.

In der Zeichnung sind Ausführungsbeispiele des Gegenstandes der Erfindung dargestellt, die nachfolgend ausführlich erläutert werden. Es zeigen

Figur 1    in räumlicher Ansichtsdarstellung zwei zur Stapelbildung übereinandergesetzte kastenförmige Behälter für Hydrokulturen, von denen jeder ein Flüssigkeits-Überlaufsystem aufweist,

Figur 2    den Stapel aus kastenförmigen Behältern nach Fig. 1 in schematisch vereinfachter Seitenansicht,

Figur 3    eine der Fig. 2 entsprechende Darstellung, jedoch bei etwas abgewandelter Ausgestaltung der Flüssigkeits-Überlaufsysteme,

Figur 4    ebenfalls in schematisch vereinfachter Seitenansicht zwei übereinandergestapelte, kastenförmige Behälter mit einer noch anderen Ausgestaltung des Flüssigkeits-Überlaufsystems,

Figur 5    teils im Schnitt und teils in der Ansicht einen kastenförmigen Behälter mit einer wieder anderen Auslegung für das Flüssigkeits-Überlaufsystem,

Figur 6    eine Ansicht in Pfeilrichtung VI der Fig. 5,

Figur 7    in größerem Maßstab und im Schnitt den in Fig. 4 mit VII gekennzeichneten Teilbereich eines kastenförmigen Behälters mit einem in Schließstellung befindlichen Absperrventil für das Flüssigkeits-Überlaufsystem und

Figur 8    eine der Fig. 7 entsprechende Darstellung, jedoch bei in Öffnungsstellung befindlichem Absperrventil des Flüssigkeits-Überlaufsystems.

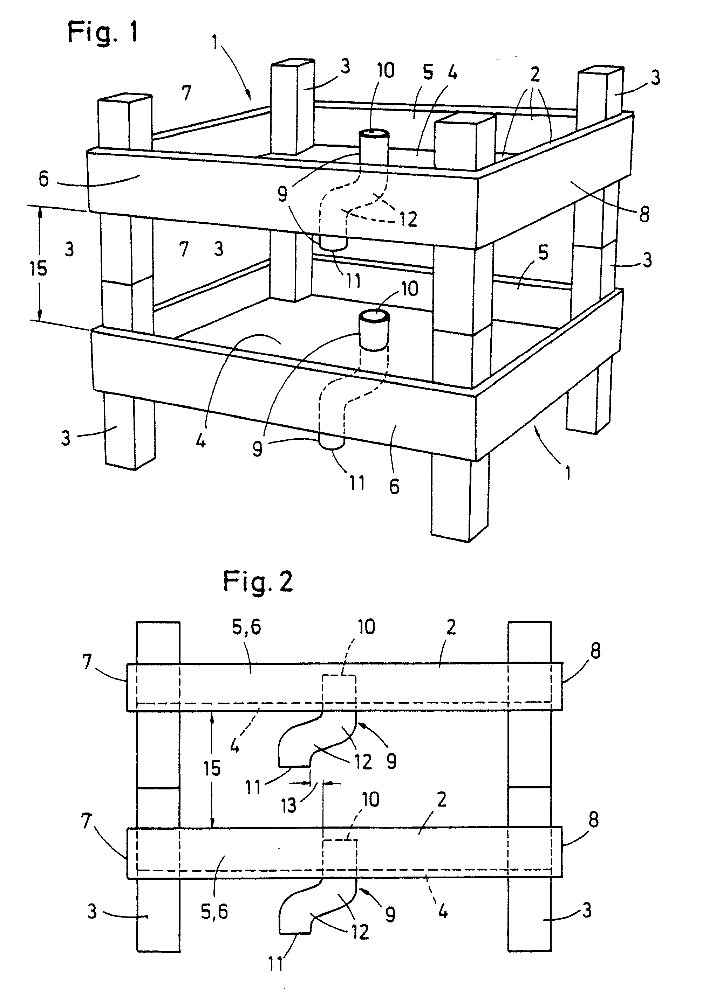

In Fig. 1 der Zeichnung sind in räumlicher Darstellung zwei kastenförmige Behälter 1 für Hydrokulturen zu sehen, die sich zur Stapelbildung übereinandersetzen lassen.

Jeder dieser kastenförmigen Behälter 1 besteht dabei aus dem eigentlichen Kastenkörper 2, der an jeder Kastenecke ein Ständerbein oder eine Ständersäule 3 aufweist.

Der Kastenkörper 2 hat dabei einen Boden 4, zwei Längsseitenwände 5, 6 und zwei Querseitenwände 7, 8.

Jedes Ständerbein 3 ist in eine vom Kastenboden 4 sowie einer Längsseitenwand 5 bzw. 6 und einer Querseitenwand 7 bzw. 8 begrenzte Eckzone des Kastenkörpers 2 integriert, und zwar so, daß es zumindest nach unten über den Kastenboden 4 vorsteht. Vorzugsweise ist die Anordnung der Ständerbeine bzw. Ständersäulen 3 jedoch so getroffen, daß sie auch nach oben um ein gewisses Maß über die Begrenzungskanten der Längsseitenwände 5, 6 und der Querseitenwände 7, 8 hinausragen, wie das deutlich die Fig. 1 erkennen läßt.

Wesentlich ist, daß der kastenförmige Behälter 1 aus Kunststoff, bspw. Polyäthylen, gefertigt ist. Dabei besteht die Möglichkeit, den vom Boden 4 sowie den Längsseitenwänden 5 und 6 und den Querseitenwänden 7 und 8 gebildeten Kastenkörper 2 gemeinsam mit allen Ständerbeinen bzw. Ständersäulen 3 als einstückiges Kunststoff-Spritzgußformteil herzustellen.

In manchen Fällen kann es jedoch vorteilhafter sein, die Ständerbeine bzw. Ständersäulen 3 getrennt vom eigentlichen Kastenkörper 2 herzustellen und sie dann später mit diesem, bspw. durch Verschweißen oder Verkleben, in feste Verbindung zu bringen.

Da die kastenförmigen Behälter 1 zum Aufbau von Hydrokulturen für die Pflanzenzüchtung, nämlich insbesondere für den Salat- und Gemüseanbau, genutzt werden sollen, liegt ein wesentliches Ausbildungsmerkmal darin, daß der Kastenkörper 2 jedes kastenförmigen Behälters 1 mindestens ein Flüssigkeits-Überlaufsystem 9 enthält. Dieses Flüssigkeits-Überlaufsystem 9 sorgt dabei einerseits dafür, daß in jedem Kastenkörper 2 oberhalb des Bodens 4 immer ein bestimmtes Niveau der darin eingefüllten Nährflüssigkeit eingehalten wird. Andererseits hat sie aber auch die wichtige Aufgabe, dafür zu sorgen, daß sämtliche Kastenkörper 2 der zu einem Stapel übereinandergesetzten kastenförmigen Behälter 1 ständig in ausreichender Menge mit Nährflüssigkeit versorgt werden. Zu diesem Zweck ist es lediglich zusätzlich notwendig, in jedem Stapel von kastenförmigen Behältern 1 einen geschlossenen Nährflüssigkeits-Kreislauf aufrechtzuerhalten, in dem der Kastenkörper 2 des im Stapel obersten kastenförmigen Behälters 1 ständig Nährflüssigkeits-Zufuhr erhält, während von dem Kastenkörper 2 des im Stapel untersten kastenförmigen Behälters 1 die überschüssige Menge von Nährflüssigkeit abgezogen wird.

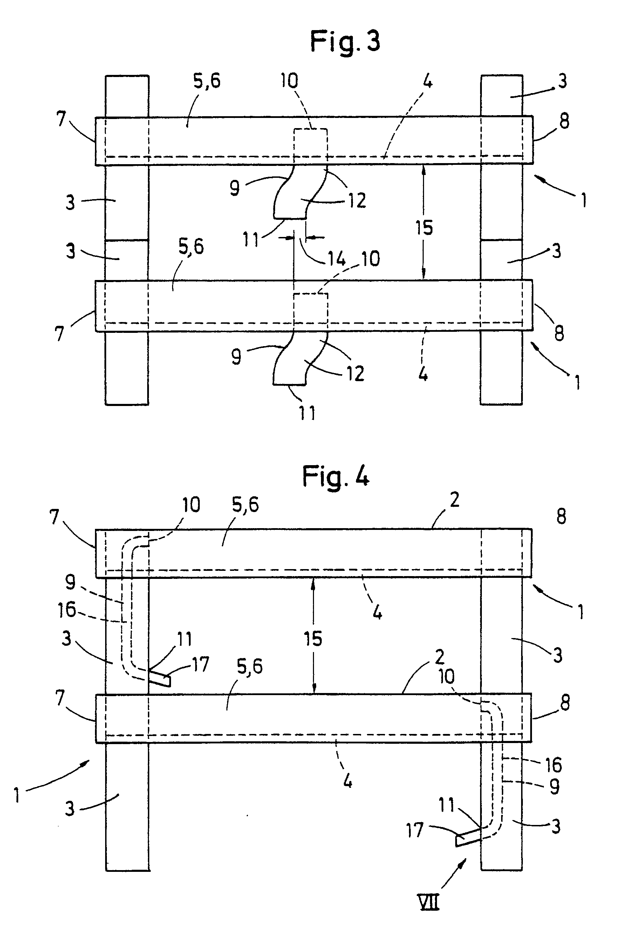

Im Kastenkörper 2 jedes kastenförmigen Behälters 1 liegt der Einlauf 10 des Flüssigkeits-Überlaufsystems 9 mit Abstand oberhalb des Kastenbodens 4, während dessen Auslauf 11 unter dem Niveau des Kastenbodens 4, aber oberhalb der unteren Enden der Ständerbeine bzw. Ständersäulen 3 mündet, wie das besonders deutlich in den Fig. 2 und 3 der Zeichnung zu sehen ist.

Nach den Fig. 1 bis 3 der Zeichnung besteht jedes Flüssigkeits-Überlaufsystem 9 aus einem doppelten Rohrknie 12, das den Kastenboden 4 durchdringt, aber abgedichtet in diesem sitzt.

Durch die Ausbildung des Flüssigkeits-Überlaufsystems 9 als doppeltes Rohrknie 12 haben dessen Einlauf 10 und Auslauf 11 naturgemäß eine seitliche Versetztlage zueinander.

Beim Ausführungsbeispiel nach Fig. 2 ist dabei die Versetztlage von Einlauf 10 und Auslauf 11 so groß bemessen, daß bei übereinandergesetzten, kastenförmigen Behältern 1 jeder Auslauf 11 um das Maß 13 außerhalb des Umfangsbegrenzung des Einlaufs 10 zu liegen kommt. Die aus dem Auslauf 11 eines Flüssigkeits-Überlaufsystems 9 austretende Nährflüssigkeit kann daher nicht unmittelbar in den Einlauf 10 am Flüssigkeits-Überlaufsystem 9 des nächstunteren, kastenförmigen Behälters 1 gelangen, sondern wird zuvor erst in den Kastenkörper 2 eingeleitet.

Demgegenüber ist beim Ausführungsbeispiel nach Fig. 3 jedes von einem doppelten Rohrknie 12 gebildete Flüssigkeits-Überlaufsystem 9 so gestaltet, daß Einlauf 10 und Auslauf 11 desselben eine Versetztlage zueinander haben, die kleiner bemessen ist als ihr jeweiliger Querschnitt. Hierdurch überlappen sich bei übereinandergesetzten kastenförmigen Behältern 1 Auslauf 11 und Einlauf 10 teilweise, nämlich um das Maß 14. Es kann daher in diesem Falle ein Teil der aus dem Auslauf 11 des obenliegenden Flüssigkeits-Überlaufsystems 9 austretenden Nährflüssigkeit unmittelbar in den Einlauf 10 des darunter gelegenen Flüssigkeits-Überlaufsystems 9 gelangen. Auch hier wird jedoch der größte Teil der einem Flüssigkeits-Überlaufsystem 9 entströmenden Nährflüssigkeit zunächst in den darunter gelegenen Kastenkörper 2 geleitet, bevor sie in den Einlauf 10 gelangt.

Der Aufbau der kastenförmigen Behälter 1 beim Ausführungsbeispiel nach Fig. 4 ist grundsätzlich der gleiche wie bei den vorher beschriebenen Ausführungsbeispielen nach den Fig. 1 bis 3. Unterschiedlich ist hier zunächst lediglich, daß die Ständerbeine oder Ständersäulen 3 die oberen Begrenzungsränder des Kastenkörpers 2 nicht überragen, sondern etwa bündig mit diesem abschließen. Dafür ist jedoch die über den Boden 4 des Kastenkörpers 2 nach unten vorstehende Länge dieser Ständerbeine oder Ständersäulen 3 entsprechend größer bemessen, d.h. der Abstand 15 zwischen der Unterseite des Bodens 4 am Kastenkörper 2 des einen kastenförmigen Behälters 1 und der Oberkante am Kastenkörper 2 des nächst unteren kastenförmigen Behälters 1 ist in allen Fällen etwa gleich.

Ein anderes Unterscheidungsmerkmal des Ausführungsbeispiels nach Fig. 4 gegenüber den Ausführungsbeispielen nach den Fig. 1 bis 3 liegt darin, daß dort das Flüssigkeits-Überlaufsystem 9 nicht im Boden 4 des Kastenkörpers 2 sitzt, sondern vielmehr in mindestens eines der Ständerbeine 3 bzw. eine der Ständersäulen 3 integriert ist.

Im Falle der Fig. 4 besteht jdes Flüssigkeits-Überlaufsystem 9 aus einem Rohrformstück 16, das in ein Ständerbein bzw. eine Ständersäule 3 eingesetzt ist, und zwar so, daß der Einlauf 10 in einer dem Inneren des Kastenkörpers 2 zugewendeten Seitenwand des Ständerbeins bzw. der Ständersäule 3 mit Abstand oberhalb des Bodens 4 mündet. Der Auslauf 11 durchdringt die gleiche Seitenwand des Ständerbeins bzw. der Ständersäule 3 mit Abstand von ihrem unteren Ende und hat dabei vorzugsweise ein Verlängerungsstück 17, das über die Außenfläche dieser Seitenwand um ein relativ beträchtliches Maß hinausragt. Es wird dadurch sichgestellt, daß die Nährflüssigkeit mit genügendem Abstand von den Wänden des Ständerbeins bzw. der Ständersäule 3 in den Kastenkörper 2 des nächst unteren kastenförmigen Behälters 1 einfließt.

Figur 4 zeigt zwei gleich ausgebildete Behälter 1, die um 180° gegeneinander versetzt aufeinandergestapelt sind. Dadurch wird erreicht, daß das Flüssigkeits-Überlaufsystem 9 des einen Behälters 1 dem des anderen Behälters 1 diagonal gegenüberliegt. Die aus dem Auslauf 11 des oberen Behälters austretende Nährflüssigkeit fließt quer durch den unteren Kastenkörper 2, bevor sie diesen über dessen Flüssigkeits-Überlaufsystem 9 wieder verläßt.

Während bei dem Flüssigkeits-Überlaufsystem 9 nach Fig. 4 der Einlauf 10, ebenso wie bei den Flüssigkeits-Überlaufsystemen 9 nach den Fig. 1 bis 3, ein festliegendes Niveau oberhalb des Bodens 4 im jeweiligen Kastenkörper 2 hat, ist es natürlich auch möglich, die Höhenlage dieses Einlaufs 10 variabel zu gestalten.

Im einfachsten Falle kann zu diesem Zweck das Rohrformstück 16 mit mehreren in verschiedener Höhenlage befindlichen, ortsfesten Einläufen 10 versehen werden, deren jeder unabhängig von den anderen mittels eines Stopfens oder Deckels freizugeben bzw. zu verschließen ist.

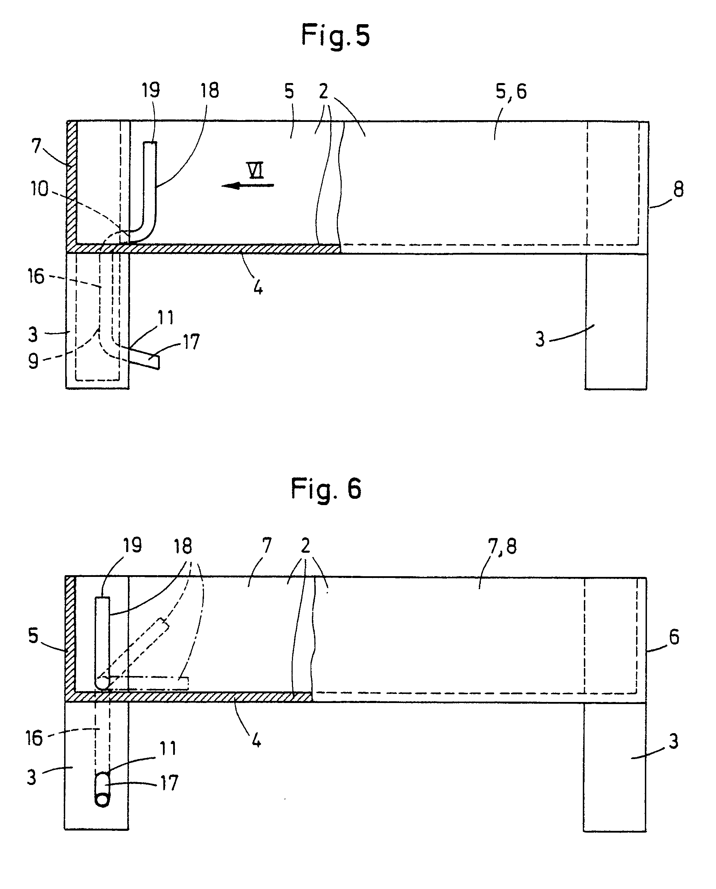

Vorteilhafter ist jedoch eine Ausführung, bei welcher der eigentliche Einlauf 10 unmittelbar oberhalb des Bodens 4 im Kastenkörper 2 liegt, wo er dann in abgedichteter Verbindung mit einem Schwenkrohr steht, wie das in den Fig. 5 und 6 der Zeichnung zu sehen ist. Das Schwenkrohr 18 läßt sich dabei vorzugsweise über einen Winkel von 90° in beliebigen Bewegungsschritten verlagern, so daß sein freies Ende 19, bezogen auf die Ebene des Bodens 4 verschiedene Höhenlagen einnehmen kann (Fig. 6). Entsprechend den unterschiedlichen Schwenkwinkeln des Schwenkrohres 18 wird daher auch ein unterschiedliches Überlaufniveau für die Nährflüssigkeit eingestellt.

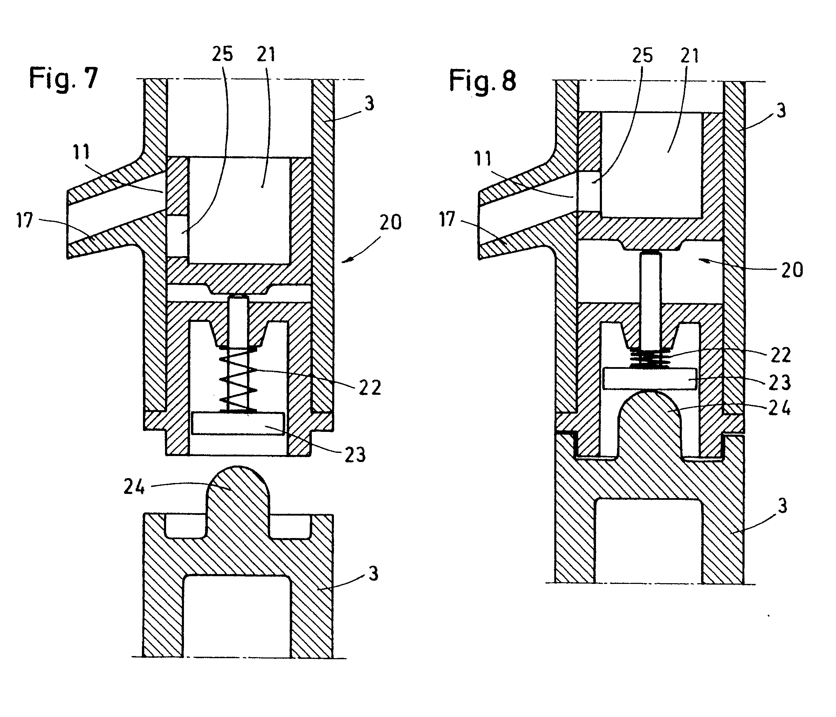

In den Fig. 7 und 8 ist noch aufgezeigt, daß es sich im Zusammenhang mit den Flüssigkeits-Überlaufsystemen nach den Fig. 4 bis 6 in manchen Fällen auch noch als zweckmäßig erweisen kann, dem Auslauf 11 noch ein Ventil 20 zuzuordnen, welches die Freigabe bzw. Absperrung des Auslaufs 11 steuert. Dabei ist es zweckmäßig, das Ventil 20 so anzuordnen und auszubilden, daß es selbsttätig öffnet, wenn mehrere kastenartige Behälter 1 zur Stapelbildung aufeinandergesetzt werden. Ebenso selbsttätig gelangt aber das Ventil 20 auch wieder in Schließlage, sobald der betreffende, kastenartige Behälter 1 aus dem Stapel entnommen und gegebenenfalls nur einzeln abgestellt wird.

Das Ventil 20 hat einen Schieber 21, welcher normalerweise durch eine Feder 22 in Sperrlage gehalten ist. Diese Feder 22 ist dabei einerseits ortsfest im Inneren des mit dem Flüssigkeits-Überlaufsystem 9 ausgestatteten Ständerbeins 3 abgestützt und greift andererseits an einen hierin verschiebbar geführten Stößel 23 an, welcher den Schieber 21 trägt. Über die Feder 22 und den Stößel 23 wird dabei der Schieber 21 normalerweise in der aus Fig. 7 ersichtlichen Absperrstellung relativ zum Auslauf 11 des Flüssigkeits-Überlaufsystems 9 gehalten.

Wird jedoch der kastenförmige Behälter 1 auf einen nächst unteren kastenförmigen Behälter 1 aufgesetzt, dann trifft der Stößel 23 auf ein Druckstück 24, welches sich am oberen Ende des Ständerbeins 3 zum nächst unteren, kastenartigen Behälter 1 befindet. Der Stößel 23 wird dadurch entgegen der Rückstellkraft der Feder 22 in das Ständerbein 3 nach oben hineingeschoben und bewegt in entsprechender Weise dann auch den Schieber 21 nach oben. Eine Durchflußöffnung 25 im Schieber 21 kommt dabei mit dem Auslauf 11 in Deckungslage und gibt diesen damit frei.

Da beim Ausführungsbeispiel nach den Fig. 7 und 8 das Ständerbein bzw. die Ständersäule 3 selbst einen Teil des Flüssigkeits-Überlaufsystems 9 bildet, braucht dieses Ständerbein 3 im Bereich des Kastenkörpers 2 nur mit einer entsprechenden Einlauföffnung versehen zu werden. Das Rohrformstück 16 nach den Fig. 4 bis 6 wird hier jedoch nicht benötigt.

## Patentansprüche

1. Kastenförmiger Behälter für Hydrokulturen, der an den Kastenecken jeweils ein Ständerbein oder eine Ständersäule aufweist, wobei diese Ständerbeine bzw. Ständersäulen zumindest nach unten über den Kastenboden vorstehen und wobei mehrere Behälter mittels ihrer Ständerbeine bzw. Ständersäulen zur Stapelbildung übereinandersetzbar sind,
**dadurch gekennzeichnet,**
daß jeder Behälter (1) in einem Kastenkörper (2) mindestens ein Flüssigkeits-Überlaufsystem (9) enthält, dessen Einlauf (10) mit Abstand oberhalb des Kastenbodens (4) liegt, während sein Auslauf (11) unter dem Niveau des Kastenbodens (4), aber oberhalb der unteren Enden der Ständerbeine bzw. Ständersäulen (3) mündet.

2. Kastenförmiger Behälter nach Anspruch 1,
**dadurch gekennzeichnet,**
daß die Höhenlage des Einlaufs (10) zum Flüssigkeits-Überlaufsystem (9) relativ zum Kastenboden (4) variierbar ist.

3. Kastenförmiger Behälter nach einem der Ansprüche 1 und 2,
**dadurch gekennzeichnet,**
daß jedes Flüssigkeits-Überlaufsystem (9) aus einem doppelten Rohrknie (12) besteht, das den Kastenboden (4) durchdringt.

4. Kastenförmiger Behälter nach Anspruch 3,
**dadurch gekennzeichnet,**
daß Einlauf (10) und Auslauf (11) des doppelten Rohrknies (12) eine Versetztlage zueinander haben, die größer bemessen ist, als ihr jeweiliger Querschnitt (Fig. 2).

5. Kastenförmiger Behälter nach Anspruch 3,
**dadurch gekennzeichnet,**

daß Einlauf (10) und Auslauf (11) des doppelten Rohrknies (12) eine Versetztlage zueinander haben, die kleiner bemessen ist, als ihr jeweiliger Querschnitt (Fig. 3).

6. Kastenförmiger Behälter nach einem der Ansprüche 1 und 2,
   **dadurch gekennzeichnet,**
   daß sich ein Flüssigkeits-Überlaufsystem (9) in mindestens einem Ständerbein bzw. einer Ständersäule (3) befindet (Fig. 4 bis 8).

7. Kastenförmiger Behälter nach einem der Ansprüche 1, 2 und 6,
   **dadurch gekennzeichnet,**
   daß jedes Ständerbein bzw. jede Ständersäule (3) ein wenigstens an seinem unteren Ende abgeschlossener, z.B. einen Boden aufweisender, Hohlkörper ist, an den sich ein einwärts gerichteter Auslauf (11), bspw. mit rohrartiger Verlängerung (17), anschließt (Fig. 7 und 8).

8. Kastenförmiger Behälter nach einem der Ansprüche 1, 2 sowie 6 und 7,
   **dadurch gekennzeichnet,**
   daß der Einlauf (10) des Flüssigkeits-Überlaufsystems (9) sich am freien Ende (19) eines Schwenkrohres (18) befindet, das um eine zum Kastenboden (4) parallele Achse beweglich gelagert ist (Fig. 5 und 6).

9. Kastenförmiger Behälter nach einem der Ansprüche 1, 2 sowie 6 und 7,
   **dadurch gekennzeichnet,**
   daß mehrere Einläufe in verschiedener Höhenlage angeordnet und unabhängig voneinander durch je einen Stopfen, Deckel oder dergleichen wahlweise verschließbar oder freigebbar sind.

10. Kastenförmiger Behälter nach einem der Ansprüche 1, 2 und 6 bis 9,
    **dadurch gekennzeichnet,**
    daß jedes Flüssigkeits-Überlaufsystem (9) ein Ventil (20) aufweist, das - vorzugsweise selbsttätig - öffen- und schließbar ist (Fig. 7 und 8).

11. Kastenförmiger Behälter nach einem der Ansprüche 1 bis 10,
    **dadurch gekennzeichnet,**
    daß der Kastenkörper (2), die Ständerbeine oder Ständersäulen (3) und das Flüssigkeits-Überlaufsystem (9) aus Kunststoff gefertigt sind.

Fig. 1

Fig. 2

7

## Fig. 3

## Fig. 4

## Fig.5

## Fig. 6

Fig. 7

25  21

3

11

17

20

22

23

24

3

Fig. 8

25  21

3

11

17

20

22

23

24

3

EP 0 445 320 A1

**Europäisches Patentamt**

# EUROPÄISCHER RECHERCHENBERICHT

Nummer der Anmeldung

## EP 90 10 4228

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | FR-A-2 461 449   (CUVILLIER)<br>* Seite 2, Zeile 13 - Seite 7, Zeile 39; Figuren 1-4 *<br>– – – | 1,2,3,4,<br>10,11 | A 01 G 31/02 |
| Y | GB-A-4 394 24   (STIRLING LEE)<br>* Seite 6, Zeile 127 - Seite 7, Zeile 11; Ansprüche 1, 2; Figur 4 *<br>– – – | 3,4 | |
| Y | CH-A-3 467 19   (WETZIKON)<br>* das ganze Dokument *<br>– – – | 10 | |
| Y | FR-A-2 390 088   (ETS. MERCIER PERE ET FILS)<br>* Seite 4, Zeile 18 - Seite 5, Zeile 12; Anspruch 1; Figuren 1-4 *<br>– – – | 11 | |
| X | FR-A-2 382 850   (CUVILLIER)<br>* Seite 2, Zeile 19 - Seite 3, Zeile 28; Figuren 1, 2 *<br>– – – | 1,2,6,9 | |
| A | BE-A-5 008 60   (SERSTE)<br>* Seite 4, Zeile 19 - Seite 6, Zeile 13; Figuren 1-5 *<br>– – – – – | 1,7,10 | |

| | | | RECHERCHIERTE SACHGEBIETE (Int. Cl.5) |
|---|---|---|---|
| | | | A 01 G |

Der vorliegende Recherchenbericht wurde für alle Patentansprüche erstellt

| Recherchenort | Abschlußdatum der Recherche | Prüfer |
|---|---|---|
| Den Haag | 30 Oktober 90 | HERYGERS J.J. |